# EUROPÄISCHE PATENTSCHRIFT

(11) **EP 2 467 612 B1**
(45) Veröffentlichungstag und Bekanntmachung des Hinweises auf die Patenterteilung: **11.06.2014**
(21) Anmeldenummer: 10740680.3
(22) Anmeldetag: 11.08.2010
(51) Int. Cl.: F16H 3/66

(54) **MEHRSTUFENGETRIEBE**
MULTI-RATIO TRANSMISSION
TRANSMISSION À PLUSIEURS ÉTAGES

(30) Priorität: 20.08.2009 DE 102009028683
(43) Veröffentlichungstag der Anmeldung: 27.06.2012
(73) Patentinhaber: ZF Friedrichshafen AG, 88038 Friedrichshafen (DE)
(72) Erfinder: GUMPOLTSBERGER, Gerhard, 88045 Friedrichshafen (DE); BECK, Stefan, 88097 Eriskirch (DE); HAUPT, Josef, 88069 Tettnang (DE); BAUKNECHT, Gert, 88048 Friedrichshafen (DE); ZIEMER, Peter, 88069 Tettnang (DE); SIBLA, Christian, 88045 Friedrichshafen (DE)
(86) Internationale Anmeldenummer: PCT/EP2010/061668
(87) Internationale Veröffentlichungsnummer: WO 2011/020749

(56) Entgegenhaltungen:
- DE-A1- 2 936 969
- DE-A1- 10 213 820
- DE-A1- 19 949 507
- US-A1- 2009 017 971

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Automatgetriebe ist beispielsweise aus der DE 199 49 507 A1 der Anmelderin bekannt; hierbei sind an der Antriebswelle zwei nicht schaltbare Vorschaltradsätze vorgesehen, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss.

Unter Verwendung von fünf Schaltelementen werden hierbei sieben Vorwärtsgänge erzielt, unter Verwendung von sechs Schaltelementen neun oder zehn Vorwärtsgänge.

Des Weiteren ist aus der DE 102 13 820 A1 ein Mehrgangautomatikgetriebe mit acht Vorwärtsgängen und einen Rückwärtsgang bekannt, umfassend einen ersten Eingangspfad T1 eines ersten Übersetzungsverhältnisses; einen Eingangspfad T2, der ein größeres Übersetzungsverhältnis als dieser Eingangspfad T1 hat; einen Planetenradsatz vom Typ Ravigneaux mit vier Elementen, wobei die vier Elemente ein erstes Element, ein zweites Element, ein drittes Element und ein viertes Element in der Reihenfolge der Elemente in einem Drehzahldiagramm sind; eine Kupplung C-2, die eine Drehung des Eingangspfads T2 auf das erste Element S3 überträgt; eine Kupplung C-1, die die Drehung von dem Eingangspfad T2 auf das vierte Element S2 überträgt; eine Kupplung C-4, die eine Drehung von dem Eingangspfad T1 auf das erste Element überträgt; eine Kupplung C-3, die die Drehung von dem Eingangspfad T1 auf das zweite Element C3 überträgt; eine Bremse B-1, die den Eingriff des vierten Elements herstellt; eine Bremse B-2, die den Eingriff des zweiten Elements herstellt; und ein Abtriebselement, das mit dem dritten Element S3 gekoppelt ist.

Ein 9-Gang-Mehrstufengetriebe ist ferner aus der DE 29 36 969 A1 bekannt; es umfasst acht Schaltelemente und vier Radsätze, wobei ein Radsatz als Vorschaltgetriebe dient und das Hauptgetriebe einen Simpson-Satz und einen weiteren als Umkehrgetriebe dienenden Radsatz aufweist.

Weitere Mehrstufengetriebe sind beispielsweise aus der DE 10 2005 010 210 A1 und der DE 10 2006 006 637 A1 der Anmelderin bekannt.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Aus der noch nicht veröffentlichten DE 102008000428.3 der Anmelderin ist ein Mehrstufengetriebe in Planetenbauweise bekannt, welches einen Antrieb und einen Abtrieb aufweist, welche in einem Gehäuse angeordnet sind. Bei dem bekannten Getriebe sind zumindest vier Planetensätze, im Folgenden als erster, zweiter, dritter und vierter Planetensatz bezeichnet, mindestens acht drehbare Wellen - im Folgenden als Antriebswelle, Abtriebswelle, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar ist.

Hierbei bilden der erste und der zweite Planetensatz, die vorzugsweise als Minus-Planetensätze ausgebildet sind, einen schaltbaren Vorschaltradsatz, wobei der dritte und der vierte Planetensatz einen Hauptradsatz bilden.

Bei dem bekannten Mehrstufengetriebe ist vorgesehen, dass die Stege des ersten und des zweiten Planetensatzes über die vierte Welle miteinander gekoppelt sind, welche mit einem Element des Hauptradsatzes verbunden ist, dass das Hohlrad des ersten Planetensatzes mit dem Sonnenrad des zweiten Planetensatzes über die achte Welle gekoppelt ist, welche über eine erste Kupplung mit der Antriebswelle lösbar verbindbar ist und dass das Sonnenrad des ersten Planetenradsatzes mittels der dritten Welle über eine erste Bremse an ein Gehäuse des Getriebes ankoppelbar und über eine zweite Kupplung mit der Antriebswelle lösbar verbindbar ist, wobei das Hohlrad des zweiten Planetensatzes mittels der fünften Welle über eine zweite Bremse an ein Gehäuse des Getriebes ankoppelbar ist. Zudem ist die siebte Welle mit zumindest einem Element des Hauptradsatzes ständig verbunden und über eine dritte Bremse an ein Gehäuse des Getriebes ankoppelbar, wobei die sechste Welle mit zumindest einem weiteren Element des Hauptradsatzes ständig verbunden und über eine dritte Kupplung mit der Antriebswelle lösbar verbindbar ist; die Abtriebswelle ist mit zumindest einem weiteren Element des Hauptradsatzes ständig verbunden.

Vorzugsweise ist bei dem bekannten Getriebe die vierte Welle ständig mit dem Hohlrad des dritten Planetensatzes verbunden, wobei die sechste Welle ständig mit dem Hohlrad des vierten Planetensatzes und dem Steg des dritten Planetensatzes verbunden und über die dritte Kupplung mit der Antriebswelle lösbar verbindbar ist. Ferner ist die siebte Welle ständig mit den Sonnenrädern des dritten und vierten Planetensatzes verbunden und über die dritte Bremse an ein Gehäuse des Getriebes ankoppelbar. Der Abtrieb erfolgt hierbei über die ständig mit dem Steg des vierten Planetensatzes verbundene Abtriebswelle. Des weiteren können der dritte und der vierte Planetensatz zu einem Ravigneaux-Satz mit einem gemeinsamen Steg und einem gemeinsamen Hohlrad zusammengesetzt bzw. reduziert sein.

Aus der US 2009/017971 A1 ist ein gattungsbildendes Mehrgangautomatikgetriebe bekannt.

Der vorliegenden Erfindung liegt die Aufgabe zugrunde, ein Mehrstufengetriebe der eingangs genannten Art vorzuschlagen, welches neun Vorwärtsgänge und mindestens einen Rückwärtsgang mit ausreichender Übersetzung aufweist, bei dem der Bauaufwand und die Baugröße, insbesondere die Baulänge, bzw. das Gewicht optimiert werden und zudem der Wirkungsgrad hinsichtlich der Schlepp- und Verzahnungsverluste verbessert wird. Zudem sollen bei dem erfindungsgemäßen Mehrstufengetriebe geringe Stützmomente auf die Schaltelemente wirken. Insbesondere soll das erfindungsgemäße Getriebe für eine Front-Quer-Bauweise geeignet sein.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des weiteren sind zumindest vier Planetensätze, im Folgenden als erster, zweiter, dritter und vierter Planetensatz bezeichnet, acht drehbare Wellen - im Folgenden als Antriebswelle, Abtriebswelle, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar sind.

Die Planetensätze sind axial betrachtet in der Reihenfolge erster Planetensatz, zweiter Planetensatz, dritter Planetensatz, vierter Planetensatz angeordnet und sind vorzugsweise als Minus -Planetensätze ausgebildet.

Ein einfacher Minus-Planetensatz umfasst bekanntlich ein Sonnenrad, ein Hohlrad und einen Steg, an dem Planetenräder drehbar gelagert sind, die jeweils mit Sonnenrad und Hohlrad kämmen. Hierdurch weist das Hohlrad bei festgehaltenem Steg eine zum Sonnenrad entgegengesetzte Drehrichtung auf. Demgegenüber umfasst ein einfacher Plus-Planetensatz ein Sonnenrad, ein Hohlrad und einen Steg, an dem innere und äußere Planetenräder drehbar gelagert sind, wobei alle inneren Planetenräder mit dem Sonnenrad und alle äußeren Planetenräder mit dem Hohlrad kämmen, wobei jedes innere Planetenrad mit jeweils einem äußeren Planetenrad kämmt. Hierdurch weist das Hohlrad bei festgehaltenem Steg die gleiche Drehrichtung auf wie das Sonnenrad.

Gemäß einer bevorzugten Ausführungsform der Erfindung ist das Sonnenrad des ersten Planetensatzes direkt mit der Antriebswelle verbunden, die über eine erste Kupplung mit der vierten Welle und über eine zweite Kupplung mit der siebten Welle lösbar verbindbar ist, wobei die vierte Welle mit dem Steg des zweiten Planetensatzes und dem Hohlrad des dritten Planetensatzes verbunden und über eine erste Bremse an ein Gehäuse des Getriebes ankoppelbar ist.

Des weiteren ist die siebte Welle mit dem Sonnenrad des vierten Planetensatzes verbunden und über eine dritte Kupplung mit der achten Welle lösbar verbindbar, welche mit dem Sonnenrad des dritten Planetensatzes und dem Sonnenrad des zweiten Planetensatzes verbunden ist.

Ferner ist die dritte Welle mit dem Steg des ersten Planetensatzes und dem Hohlrad des zweiten Planetensatzes verbunden und über eine zweite Bremse an ein Gehäuse des Getriebes ankoppelbar, wobei die fünfte Welle mit dem Hohlrad des ersten Planetensatzes verbunden und über eine dritte Bremse an ein Gehäuse des Getriebes ankoppelbar ist, wobei die sechste Welle mit dem Steg des dritten Planetensatzes und dem Hohlrad des vierten Planetensatzes verbunden ist; die Abtriebswelle ist erfindungsgemäß mit dem Steg des vierten Planetensatzes verbunden.

Durch die erfindungsgemäße Ausgestaltung des Mehrstufengetriebes ergeben sich insbesondere für Personenkraftwagen geeignete Übersetzungen sowie eine erhöhte Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Des weiteren ergibt sich bei dem erfindungsgemäßen Mehrstufengetriebe ein guter Wirkungsgrad in den Hauptfahrgängen bezüglich der Schlepp- und Verzahnungsverluste.

Ferner liegen geringe Momente in den Schaltelementen und in den Planetensätzen des Mehrstufengetriebes vor, wodurch der Verschleiß bei dem Mehrstufengetriebe in vorteilhafter Weise reduziert wird. Zudem wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der beigefügten Figuren beispielhaft näher erläutert. In diesen stellen dar:
- Figur 1:: Eine schematische Ansicht einer ersten bevorzugten Ausführungsform eines erfindungsgemäßen Mehrstufengetriebes; und
- Figur 2:: Ein beispielhaftes Schaltschema für ein Mehrstufengetriebe gemäß Figur 1.

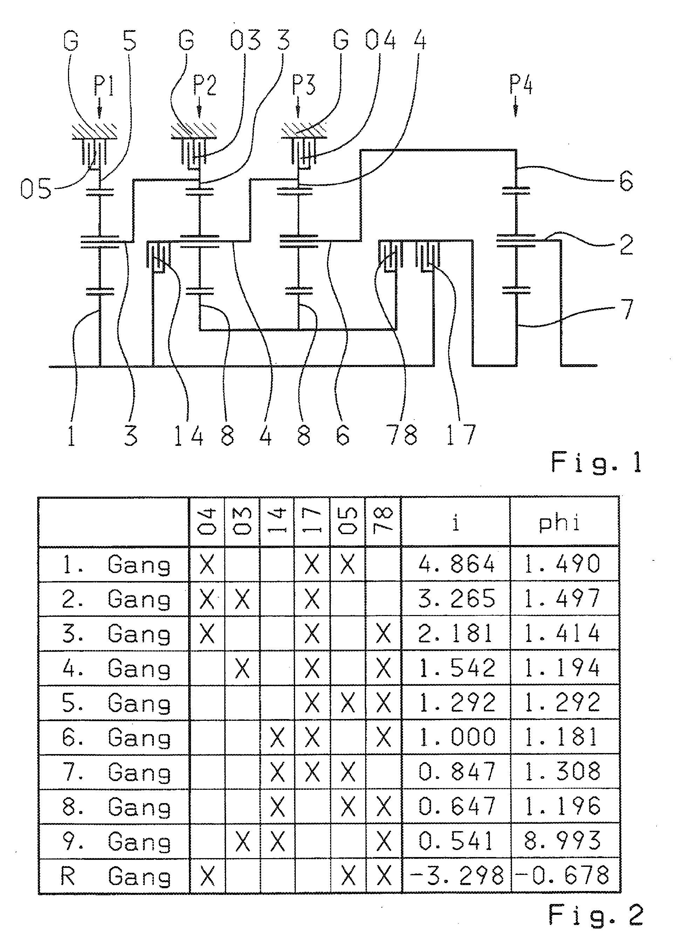

In Figur 1 ist ein erfindungsgemäßes Mehrstufengetriebe mit einer Antriebswelle 1, einer Abtriebswelle 2 und vier Planetensätzen P1, P2, P3 und P4 dargestellt, welche in einem Gehäuse G angeordnet sind. Die Planetensätze P1, P2, P3 und P4 sind bei dem in Figur 1 gezeigten Beispiel als Minus-Planetensätze ausgebildet. Gemäß der Erfindung kann zumindest ein Planetensatz als Plus-Planetensatz ausgeführt sein, wenn gleichzeitig die Steg- und Hohlradanbindung getauscht und der Betrag der Standübersetzung um 1 erhöht wird.

Bei dem gezeigten Ausführungsbeispiel sind die Planetensätze axial betrachtet in der Reihenfolge P1, P2, P3, P4 angeordnet.

Wie aus Figur 1 ersichtlich, sind sechs Schaltelemente, nämlich drei Bremsen 03, 04, 05 und drei Kupplungen 14, 17, und 78 vorgesehen. Die räumliche Anordnung der Schaltelemente kann beliebig sein und wird nur durch die Abmessungen und die äußere Formgebung begrenzt. Die Kupplungen und die Bremsen des Getriebes sind vorzugsweise als Reibschaltelemente bzw. Lamellenschaltelemente ausgeführt.

Mit diesen Schaltelementen ist ein selektives Schalten von neun Vorwärtsgängen und einem Rückwärtsgängen realisierbar. Das erfindungsgemäße Mehrstufengetriebe gemäß Figur 1 weist insgesamt acht drehbare Wellen auf, nämlich die Wellen 1, 2, 3, 4, 5, 6, 7 und 8, wobei die Antriebswelle die erste Welle und die Abtriebswelle die zweite Welle des Getriebes bildet.

Bei der in Figur 1 gezeigten Ausführungsform ist das Sonnenrad des ersten Planetensatzes P1 direkt mit der Antriebswelle 1 verbunden, welche über eine erste Kupplung 14 mit der vierten Welle 4 und über eine zweite Kupplung 17 mit der siebten Welle 7 lösbar verbindbar ist, wobei die vierte Welle 4 mit dem Steg des zweiten Planetensatzes P2 und dem Hohlrad des dritten Planetensatzes P3 verbunden und über eine erste Bremse 04 an ein Gehäuse G des Getriebes ankoppelbar ist. Ferner ist die siebte Welle 7 mit dem Sonnenrad des vierten Planetensatzes P4 verbunden und über eine dritte Kupplung 78 mit der achten Welle 8 lösbar verbindbar, welche mit dem Sonnenrad des dritten Planetensatzes P3 und dem Sonnenrad des zweiten Planetensatzes P2 verbunden ist.

Wie aus Figur 1 ersichtlich, ist die dritte Welle 3 mit dem Steg des ersten Planetensatzes P1 und dem Hohlrad des zweiten Planetensatzes P2 verbunden und über eine zweite Bremse 03 an ein Gehäuse G des Getriebes ankoppelbar, wobei die fünfte Welle 5 mit dem Hohlrad des ersten Planetensatzes P1 verbunden und über eine dritte Bremse 05 an ein Gehäuse G des Getriebes ankoppelbar ist, wobei die sechste Welle 6 mit dem Steg des dritten Planetensatzes P3 und dem Hohlrad des vierten Planetensatzes P4 verbunden ist und wobei die Abtriebswelle 2 mit dem Steg des vierten Planetensatzes P4 verbunden ist.

Erfindungsgemäß können die zweite und die dritte Kupplung 17 und 78 axial betrachtet zwischen dem dritten und dem vierten Planetensatz P3, P4 angeordnet sein und einen gemeinsamen Außenlamellenträger aufweisen, wobei die erste Kupplung 14 axial betrachtet zwischen dem ersten und dem zweiten Planetensatz P1, P2 angeordnet sein kann.

In Figur 2 ist ein beispielhaftes Schaltschema eines Mehrstufengetriebes gemäß Figur 1 dargestellt. Für jeden Gang werden drei Schaltelemente geschlossen. Dem Schaltschema können die jeweiligen Übersetzungen i der einzelnen Gangstufen und die daraus zu bestimmenden Gangsprünge bzw. Stufensprünge phi zum nächst höheren Gang beispielhaft entnommen werden, wobei der Wert 8,993 die Spreizung des Getriebes darstellt.

Typische Werte für die Standübersetzungen der als Minus-Planetensätze ausgeführten Planetensätze P1, P2, P3 und P4 sind jeweils -1,80, -3,554, - 1,851 und - 2,265. Aus Figur 2 wird ersichtlich, dass bei sequentieller Schaltweise Doppelschaltungen bzw. Gruppenschaltungen vermieden werden, da zwei benachbarte Gangstufen zwei Schaltelemente gemeinsam benutzen. Ferner wird ersichtlich, dass eine große Spreizung bei kleinen Gangsprüngen erzielt wird.

Der erste Vorwärts-Gang ergibt sich durch Schließen der ersten und dritten Bremse 04, 05 und der zweiten Kupplung 17, der zweite Vorwärts-Gang durch Schließen der ersten und zweiten Bremse 04, 03 und der zweiten Kupplung 17, der dritte Vorwärts-Gang durch Schließen ersten Bremse 04 und der zweiten und dritten Kupplung 17, 78, der vierte Vorwärts-Gang durch Schließen der zweiten Bremse 03 und der zweiten und dritten Kupplung 17, 78, der fünfte Vorwärts-Gang durch Schlieβen der dritten Bremse 05 und der zweiten und dritten Kupplung 17, 78, der vorzugsweise als Direktgang ausgeführte sechste Vorwärts-Gang durch Schließen der ersten, zweiten und dritten Kupplung 14, 17, 78, der siebte Vorwärts-Gang durch Schließen der dritten Bremse 05 und der ersten und zweiten Kupplung 14, 17, der achte Vorwärts-Gang durch Schließen der dritten Bremse 05 und der ersten und dritten Kupplung 14, 78 und der neunte Vorwärts-Gang ergibt sich durch Schließen der zweiten Bremse 03 und der ersten und dritten Kupplung 14, 78, wobei sich der Rückwärtsgang durch Schließen der ersten und dritten Bremse 04, 05 und der dritten Kupplung 78 ergibt.

Dadurch, dass im ersten Vorwärtsgang und im ersten Rückwärtsgang die erste Bremse 04 und die dritte Bremse 05 geschlossen sind, können diese Schaltelemente als Anfahrelemente eingesetzt werden.

Gemäß der Erfindung können sich auch bei gleichem Getriebeschema je nach Schaltlogik unterschiedliche Gangsprünge ergeben, so dass eine anwendungs- bzw. fahrzeugspezifische Variation ermöglicht wird.

Erfindungsgemäß ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Reibschaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: erste Welle, Antriebswelle
- 2: zweite Welle, Abtriebswelle
- 3: dritte Welle
- 4: vierte Welle
- 5: fünfte Welle
- 6: sechste Welle
- 7: siebte Welle
- 8: achte Welle
- 8': achte Welle
- 03: erste Bremse
- 04: zweite Bremse
- 13: erste Kupplung
- 16: zweite Kupplung
- 18': vierte Kupplung
- 48: vierte Kupplung
- 67: dritte Kupplung
- P1: erster Planetensatz
- P2: zweiter Planetensatz
- P3: dritter Planetensatz
- P4: vierter Planetensatz
- i: Übersetzung
- phi: Stufensprung
- G: Gehäuse

## Patentansprüche

1. Mehrstufengetriebe in Planetenbauweise, insbesondere Automatgetriebe für ein Kraftfahrzeug, umfassend eine Antriebswelle (1), eine Abtriebswelle (2) und vier Planetensätze (P1, P2, P3, P4), welche in einem Gehäuse (G) angeordnet sind, insgesamt acht drehbare Wellen (1, 2, 3, 4, 5, 6, 7, 8) sowie mindestens sechs Schaltelemente (03, 04, 05, 14, 17, 78), umfassend Bremsen (03, 04, 05) und Kupplungen (14, 17, 78), deren selektives Eingreifen verschiedene Übersetzungsverhältnisse zwischen der Antriebswelle (1) und der Abtriebswelle (2) bewirkt, so dass neun Vorwärtsgänge und ein Rückwärtsgang realisierbar sind, wobei das Sonnenrad des ersten Planetensatzes (P1) direkt mit der Antriebswelle (1) verbunden ist, die über eine erste Kupplung (14) mit der vierten Welle (4) und über eine zweite Kupplung (17) mit der siebten Welle (7) lösbar verbindbar ist, wobei die vierte Welle (4) mit dem Steg des zweiten Planetensatzes (P2) und dem Hohlrad des dritten Planetensatzes (P3) verbunden und über eine erste Bremse (04) an ein Gehäuse (G) des Getriebes ankoppelbar ist, **dadurch gekennzeichnet, daß** die siebte Welle (7) mit dem Sonnenrad des vierten Planetensatzes (P4) verbunden und über eine dritte Kupplung (78) mit der achten Welle (8) lösbar verbindbar ist, welche mit dem Sonnenrad des dritten Planetensatzes (P3) und dem Sonnenrad des zweiten Planetensatzes (P2) verbunden ist, wobei die dritte Welle (3) mit dem Steg des ersten Planetensatzes (P1) und dem Hohlrad des zweiten Planetensatzes (P2) verbunden und über eine zweite Bremse (03) an ein Gehäuse (G) des Getriebes ankoppelbar ist, wobei die fünfte Welle (5) mit dem Hohlrad des ersten Planetensatzes (P1) verbunden und über eine dritte Bremse (05) an ein Gehäuse (G) des Getriebes ankoppelbar ist, und wobei die sechste Welle (6) mit dem Steg des dritten Planetensatzes (P3) und dem Hohlrad des vierten Planetensatzes (P4) verbunden ist und die Abtriebswelle (2) mit dem Steg des vierten Planetensatzes (P4) verbunden ist.

2. Mehrstufengetriebe nach Anspruch 1, **dadurch gekennzeichnet, dass** die Planetensätze (P1, P2, P3, P4) als Minus-Planetensätze ausgebildet sind.

3. Mehrstufengetriebe nach Anspruch 1 oder 2, **dadurch gekennzeichnet, dass** sich der erste Vorwärts-Gang durch Schließen der ersten und dritten Bremse (04, 05) und der zweiten Kupplung (17), der zweite Vorwärts-Gang durch Schließen der ersten und zweiten Bremse (04, 03) und der zweiten Kupplung (17), der dritte Vorwärts-Gang durch Schließen ersten Bremse (04) und der zweiten und dritten Kupplung (17, 78), der vierte Vorwärts-Gang durch Schließen der zweiten Bremse (03) und der zweiten und dritten Kupplung (17, 78), der fünfte Vorwärts-Gang durch Schließen der dritten Bremse (05) und der zweiten und dritten Kupplung (17, 78), der sechste Vorwärts-Gang durch Schließen der ersten, zweiten und dritten Kupplung (14, 17, 78), der siebte Vorwärts-Gang durch Schließen der dritten Bremse (05) und der ersten und zweiten Kupplung (14, 17), der achte Vorwärts-Gang durch Schließen der dritten Bremse (05) und der ersten und dritten Kupplung (14, 78) und dass sich der neunte Vorwärts-Gang durch Schließen der zweiten Bremse (03) und der ersten und dritten Kupplung (14, 78) ergibt, wobei sich der Rückwärtsgang durch Schließen der ersten und dritten Bremse (04, 05) und der dritten Kupplung (78) ergibt.

## Claims

1. Multi-stage gearbox of planetary construction, in particular automatic gearbox for a motor vehicle, comprising a drive input shaft (1), a drive output shaft (2) and four planetary gear sets (P1, P2, P3, P4) which are arranged in a housing (G), a total of eight rotatable shafts (1, 2, 3, 4, 5, 6, 7 8) and at least six shift elements (03, 04, 05, 14, 17, 78), comprising brakes (03, 04, 05) and clutches (14, 17, 78), the selective engagement of which generates different transmission ratios between the drive input shaft (1) and the drive output shaft (2), such that nine forward gears and one reverse gear can be realized, wherein the sun gear of the first planetary gear set (P1) is connected directly to the drive input shaft (1) which can be detachably connected by means of a first clutch (14) to the fourth shaft (4) and by means of a second clutch (17) to the seventh shaft (7), wherein the fourth shaft (4) is connected to the web of the second planetary gear set (P2) and to the internal gear of the third planetary gear set (P3) and can be coupled by means of a first brake (04) to a housing (G) of the gearbox, **characterized in that** the seventh shaft (7) is connected to the sun gear of the fourth planetary gear set (P4) and can be detachably connected by means of a third clutch (78) to the eighth shaft (8) which is connected to the sun gear of the third planetary gear set (P3) and to the sun gear of the second planetary gear set (P2), wherein the third shaft (3) is connected to the web of the first planetary gear set (P1) and to the internal gear of the second planetary gear set (P2) and can be coupled by means of a second brake (03) to a housing (G) of the gearbox, wherein the fifth shaft (3) is connected to the internal gear of the first planetary gear set (P1) and can be coupled by means of a third brake (05) to a housing (G) of the gearbox, and wherein the sixth shaft (6) is connected to the web of the third planetary gear set (P3) and to the internal gear of the fourth planetary gear set (P4) and the drive output shaft (2) is connected to the web of the fourth planetary gear set (P4).

2. Multi-stage gearbox according to Claim 1, **characterized in that** the planetary gear sets (P1, P2, P3, P4) are configured as minus planetary gear sets.

3. Multi-stage gearbox according to Claim 1 or 2, **characterized in that** the first forward gear is generated by closing the first and third brakes (04, 05) and the second clutch (17), the second forward gear is generated by closing the first and second brakes (04, 03) and the second clutch (17), the third forward gear is generated by closing the first brake (04) and the second and third clutches (17, 78), the fourth forward gear is generated by closing the second brake (03) and the second and third clutches (17, 78), the fifth forward gear is generated by closing the third brake (05) and the second and third clutches (17, 78), the sixth forward gear is generated by closing the first, second and third clutches (14, 17, 78), the seventh forward gear is generated by closing the third brake (05) and the first and second clutches (14, 17), the eighth forward gear is generated by closing the third brake (05) and the first and third clutches (14, 78), and **in that** the ninth forward gear is generated by closing the second brake (03) and the first and third clutches (14, 78), wherein the reverse gear is generated by closing the first and third brakes (04, 05) and the third clutch (78).

## Revendications

1. Transmission à plusieurs étages de construction planétaire, en particulier transmission automatique pour un véhicule automobile, comprenant un arbre d'entraînement (1), un arbre de sortie (2) et quatre trains planétaires (P1, P2, P3, P4) qui sont disposés dans un boîtier (G), au total huit arbres rotatifs (1, 2, 3, 4, 5, 6, 7, 8) ainsi qu'au moins six éléments de changement de vitesse (03, 04, 05, 14, 17, 78), comprenant des freins (03, 04, 05) et des embrayages (14, 17, 78), dont l'engagement sélectif produit différents rapports de transmission entre l'arbre d'entraînement (1) et l'arbre de sortie (2), de telle sorte que l'on puisse réaliser neuf vitesses de marche avant et une vitesse de marche arrière, la roue solaire du premier train planétaire (P1) étant connectée directement à l'arbre d'entraînement (1) qui peut être connecté de manière détachable par le biais d'un premier embrayage (14) au quatrième arbre (4) et par le biais d'un deuxième embrayage (17) au septième arbre (7), le quatrième arbre (4) étant connecté au porte-satellite du deuxième train planétaire (P2) et à la couronne du troisième train planétaire (P3) et pouvant être accouplé par le biais d'un premier frein (04) à un boîtier (G) de la transmission, **caractérisée en ce que** le septième arbre (7) est connecté à la roue solaire du quatrième train planétaire (P4) et peut être connecté de manière détachable par le biais d'un troisième embrayage (78) au huitième arbre (8), qui est connecté à la roue solaire du troisième train planétaire (P3) et à la roue solaire du deuxième train planétaire (P2), le troisième arbre (3) étant connecté au porte-satellite du premier train planétaire (P1) et à la couronne du deuxième train planétaire (P2) et pouvant être accouplé par le biais d'un deuxième frein (03) à un boîtier (G) de la transmission, le cinquième arbre (5) étant connecté à la couronne du premier train planétaire (P1) et pouvant être accouplé par le biais d'un troisième frein (05) à un boîtier (G) de la transmission, et le sixième arbre (6) étant connecté au porte-satellite du troisième train planétaire (P3) et à la couronne du quatrième train planétaire (P4) et l'arbre de sortie (2) étant connecté au porte-satellite du quatrième train planétaire (P4).

2. Transmission à plusieurs étages selon la revendication 1, **caractérisée en ce que** les trains planétaires (P1, P2, P3, P4) sont réalisés sous forme de trains planétaires négatifs.

3. Transmission à plusieurs étages selon la revendication 1 ou 2, **caractérisée en ce que** la première vitesse de marche avant est obtenue par fermeture du premier et du troisième frein (04, 05) et du deuxième embrayage (17), la deuxième vitesse de marche avant est obtenue par fermeture du premier et du deuxième frein (04, 03) et du deuxième embrayage (17), la troisième vitesse de marche avant est obtenue par fermeture du premier frein (04) et du deuxième et du troisième embrayage (17, 78), la quatrième vitesse de marche avant est obtenue par fermeture du deuxième frein (03) et du deuxième et du troisième embrayage (17, 78), la cinquième vitesse de marche avant est obtenue par fermeture du troisième frein (05) et du deuxième et du troisième embrayage (17, 78), la sixième vitesse de marche avant est obtenue par fermeture du premier, du deuxième et du troisième embrayage (14, 17, 78), la septième vitesse de marche avant est obtenue par fermeture du troisième frein (05) et du premier et du deuxième embrayage (14, 17), la huitième vitesse de marche avant est obtenue par fermeture du troisième frein (05) et du premier et du troisième embrayage (14, 78) et **en ce que** la neuvième vitesse de marche avant est obtenue par fermeture du deuxième frein (03) et du premier et du troisième embrayage (14, 78), la vitesse de marche arrière étant obtenue par fermeture du premier et du troisième frein (04, 05) et du troisième embrayage (78).
